# EUROPÄISCHE PATENTSCHRIFT

(11) **EP 3 339 876 B1**
(45) Veröffentlichungstag und Bekanntmachung des Hinweises auf die Patenterteilung: **05.07.2023**
(21) Anmeldenummer: 17206477.6
(22) Anmeldetag: 11.12.2017
(51) Int. Cl.: G01S 5/04, G01S 7/36, G01S 13/79, G01S 13/86

(54) **VERFAHREN ZUM BETREIBEN EINES RADARSYSTEMS ZUR VERMEIDUNG VON TÄUSCHUNGEN DURCH DRITTE**
METHOD FOR OPERATING A RADAR SYSTEM FOR PREVENTING DECEPTION BY THIRD PARTIES
PROCÉDÉ DE FONCTIONNEMENT D'UN SYSTÈME RADAR PERMETTANT D'ÉVITER DES TROMPERIES PAR DES TIERS

(30) Priorität: 20.12.2016 DE 102016015107
(43) Veröffentlichungstag der Anmeldung: 27.06.2018
(73) Patentinhaber: Rheinmetall Air Defence AG, 8050 Zürich (CH)
(72) Erfinder: Frick, Henry Roger, 8442 Hettlingen (CH)
(74) Vertreter: Hübsch, Dirk

(56) Entgegenhaltungen:
- GB-A- 832 793
- GB-A- 2 517 663
- US-A1- 2014 354 464

## Beschreibung

Die Erfindung betrifft ein Verfahren zum Betreiben eines Radarsystems zur Vermeidung von Täuschungen durch Dritte gemäß den Merkmalen des Oberbegriffes des Patentanspruches 1.

Das Radarsystem weist einen Suchradar und mindestens einen Peilempfänger auf. Mittels des Suchradars werden Pulse zeitlich beabstandet gesendet. Die von dem Suchradar ausgesandten Pulse werden nun an einem Ziel gestreut und von dem mindestens einen Peilempfänger und vom Suchradar werden entsprechende Empfangspulse gemessen. Solche Radarsysteme sind einer Vielzahl von Störungen ausgesetzt, wobei diese Störungen zufällig auftreten können oder aber auch gewollt in das Radarsystem von außen eingebracht werden. Derartige Störungen können so beeinträchtigend wirken, dass die Funktion des Radarsystems nicht mehr aufrechterhalten werden kann. Die Fähigkeit, Störungen in gegnerische elektronische Radarsysteme einzubringen, ist ständig weiterentwickelt worden. Störung führen dazu, dass das Radarsystem nicht mehr die volle Funktion erfüllen kann.

Ein bekanntes Beispiel für einen Störer im Radarsystem ist ein schmalbandiger Störer. Dieser schmalbandige Störer sendet zur Empfangsantenne bzw. zum entsprechenden Peilempfänger ein Signal mit derselben Frequenz, wie das am Ziel reflektierte Nutzsignal. Das System erkennt das fremde Störsignal daran, dass ein zusätzlicher Empfangssignalanteil eine vollständige Auswertung des Nutzsignals zumindest teilweise behindert und sogar vollständig verhindert. So kann beispielsweise diese Distanz zum Ziel nicht aus dem Nutzsignal herausgelesen werden.

Die Täuschung ist im Gegensatz zur Störung dadurch gekennzeichnet, dass das Radarsystem zumindest am Anfang der Täuschaktion nicht erkennt, dass das Täuschsignal nicht das eigentliche Nutzsignal ist. Dadurch geht das Radarsystem von falschen Voraussetzungen aus und trifft falsche Entscheidungen. Weiter verwirren Täuschsignale das Radarsystem und es ist nicht mehr klar, welche gemessenen Parameter, wie z.B. die Distanz oder die Geschwindigkeit eines vermeintlichen Zieles, reale Zielparameter sind. Zudem können Falschziele, welche durch Täuschsignale entstehen, das Radarsystem sättigen und überfordern. Daraus ergibt sich in der Folge der Zusammenbruch der Funktion, für welche das Radarsystem eingesetzt wird. Die Täuschung eines Radarsystems ist erheblich anspruchsvoller als das reine Aussenden eines Störsignals des schmalbandigen Störers. Durch die Weiterentwicklung von elektronischen Bauteilen konnten in den letzten Jahren die Möglichkeiten einer erfolgreichen Täuschung allerdings erheblich verbessert werden. Heute werden für die Täuschung von Radarsystemen sogenannte Digital-Radio-Frequency-Memory-Systeme (DRFM-Systeme) eingesetzt. Dabei empfängt das DRFM-System das von der Sendeantenne des Radarsystems ausgesandte Signal, speichert es, manipuliert es und sendet dieses als Täuschsignal zur Empfangsantenne des Radarsystems zurück. Die heutige Technologie ist so weit fortgeschritten, dass Täuschsignale erzeugt werden können, die von dem Radarsystem als echte Nutzsignale eingeschätzt werden. Heutige DRFM-Systeme sind derart leistungsfähig, dass ein empfangener Signalanteil in demselben Pulsrepetitionsintervall (PRI) eines gepulsten Radarsystems wieder ausgesendet werden kann. Dies führt dazu, dass im selben PRI Falschziele durch das DRFM-System erzeugt werden können. Alle bisherigen bekannten Gegenmaßnahmen, die darauf beruhen die Radarsystemparameter vom PRI zu PRI zu ändern, versagen daher.

Aus der US 7,081,846 B1 ist ein Täuschverfahren zum Täuschen eines Radarsystems bekannt, welches mit Pulskompression arbeitet. Durch die gezielte Manipulation des echten Nutzsignals sollen am Ausgang eines radarinternen Matched-Filters zusätzliche Seitenkeulen erzeugt werden. Diese Seitenkeulen täuschen dem Radarsystem Falschziele vor.

Aus der GB 832 793 A ist ein Radarsystem mit drei Transmitter- bzw. Empfängereinheiten A, B, C bekannt. Jede der Einheiten A, B, C weist eine Anzeige zur Positionsbestimmung ("plan position indicator") des Ziels auf, wobei der Azimutwinkel und die Distanz zum Ziel angezeigt werden. Mittels eines Jammers kann ein Radarsignal gestört werden, wobei zwar keine Information mehr über die Entfernung vorliegen, jedoch noch der Azimutwinkel bekannt ist. Hierbei kann durch eine Triangulation der Ort des Ziels ermittelt werden.

Aus der GB 251 7663 A ist eine zufällige Variation der Leistung oder der Frequenz eines Radarsignals oder die Änderung eines Codes eines Radarsignals von Puls zu Puls bekannt. Dieses Verfahren basiert darauf, dass das DRFM-System nicht genau bestimmen kann, ob der Radarpuls in der Leistung moduliert ist oder nicht. Allerdings hat das Verfahren den Nachteil, dass ein DRFM-System über einen Beobachtungszeitraum diese Leistungsmodulation erkennen könnte und dann versuchen kann, eine Gesetzmäßigkeit zu erkennen. Zudem kann der Radarpuls durch Zielfluktuation so in der Leistung verändert werden, dass der Radarpuls als falscher Radarpuls missinterpretiert wird. Eine Verringerung der Sendeleistung hat ferner, den Nachteil, dass die Detektionsreichweite abnimmt. Wird hingegen die Sendeleistung erhöht, muss das Empfangssignal gedämpft werden, wobei der Rauschpegel des Radarempfängers konstant bleibt und das Signal-zu-Rauschverhältnis verschlechtert wird, was nicht zur einer Verbesserung der Detektion beiträgt.

Der Stand der Technik hat den Nachteil, dass keine Methoden bekannt sind, die Täuschungen eines Radarsystems mittels DRFM-Systemen zu kompensieren.

Der Erfindung liegt daher die Aufgabe zugrunde ein Radarsystem mit einem Suchradar derart auszugestalten, dass Täuschsignale und echte Nutzsignale unterschieden werden können.

Diese der Erfindung zugrunde liegende Aufgabe wird nun durch ein Verfahren mit den Merkmalen des Patentanspruches 1 gelöst. Das Verfahren nutzt einen Suchradar und mindestens einen Peilempfänger. Vorzugsweise sind mehrere Peilempfänger vorhanden. Die Peilempfänger und das Suchradar sind nicht am selben Ort angeordnet, sondern jeweils an unterschiedlichen Orten. Hierdurch kann das Ziel aus mehreren Richtungen gepeilt werden. Von dem Suchradar werden mehrere Pulse zeitlich beabstandet mit unterschiedliche Codes und/oder mit unterschiedlichen Signalformen gesendet. Die Codes werden zufällig erzeugt. Die Signalformen werden zufällig variiert.

Die Codes werden von einem Zufallsgenerator erzeugt. Als Codes können beispielsweise N-stellige binäre Zahlen verwendet werden. Der Suchradar nutzt einen zufälligen Code und moduliert den Radarsendepuls mit diesem Code. Es wird insbesondere aus 2^{N}-M möglichen N-stelligen binären Zahlen zufällig eine ausgewählt und der Radarsendepuls wird mit dieser Zahl unter Anwendung eines digitalen Modulationsverfahrens moduliert. Somit hat Suchradar aus 2^{N}-M binären Zahlen die Wahl. M ist die Anzahl der binären Zahlen, welche innerhalb einer gewissen Zeitperiode schon gewählt worden sind. Alle Codes innerhalb von M Pulsrepetitionsintervallen sind vorzugsweise unterschiedlich, wobei M größer gleich 2 ist. Ist somit eine binäre Zahl gewählt worden und wird diese für ein Pulsrepetitionsintervall genutzt, so soll diese erst nach einer gewissen Zeit wieder wählbar sein. Wird N groß gewählt, z.B. N=7 und M=2, so ergibt sich für jedes Pulsrepetitionsintervall PRI 126 wählbare binäre Zahlen. Dabei wird die schon gewählte Zahl für die Dauer von M=2 Pulsrepetitionsintervallen gesperrt, kann aber nach dem zweiten Pulsrepetitionsintervall wieder gewählt werden. Ist die Zahl N genügend groß, so kann diese sogar öffentlich bekannt sein, d.h. der Gegner darf diese wissen. Hingegen kann M eine geheime feste Größe sein oder sogar auch mit einem Zufallsgenerator im Suchradar bestimmt werden. Es muss aber M > 1 gelten. Mit dieser Maßnahme ist das Pulsrepetitionsintervall immer mit einer eindeutigen Nummer versehen und alle Pulse, welche diesem Pulsrepetitionsintervall angehören, können diesem Pulsrepetitionsintervall und somit einer zeitlichen Gültigkeit zugeordnet werden.

Als weitere Variante kann jeder Zahl eine besondere Signalform zugeordnet werden. Diese Signalformen sind vorzugsweise so zu wählen, dass diese orthogonal zueinander sind. Somit kann der Empfänger mit Hilfe eines signalangepassten Filters die besondere, aktuelle Signalformen aus einer Fülle von anderen empfangenen Signalformen extrahieren. Damit lassen sich auch Mehrwegausbreitungseffekte soweit bearbeiten, dass das erwünschte empfangene Signal zeitlich von den anderen empfangenen Signalen getrennt werden kann.

Es kann eine konstante Trägerfrequenz für alle Sendepulse verwendet werden. Wird aufgrund einer Veränderung und/oder Fluktuation des Radarrückstrahlquerschnitts der Einsatz mehrerer Sendefrequenzen nötig, um die Wahrscheinlichkeit einer Zieldetektion zu erhöhen, kann die Anzahl der Trägerfrequenzen erhöht werden. Dabei soll eine Anzahl von K=4 als typischer Nennwert gelten. Die Verwendung mehrerer Frequenzen ist auch als Frequency-Diversity bekannt und dient allein der Erhöhung der Zieldetektionswahrscheinlichkeit bei stark fluktuierenden Radarrückstrahlquerschnitten. Da heutige Störer in der Lage sind, ein breites Frequenzband simultan mit einem Rauschsignal zu stören, sind Frequenzwechsel als elektronische Gegenmaßnahmen nicht mehr anwendbar. In diesem Sinne genügt nur eine Sendefrequenz, um die Ausführung des Radarsystems einfach zu halten.

Der Suchradar erzeugt einen Burst der aus Q-Pulsen besteht, welche vorzugsweise jede mit einer anderen zufällig gewählten binären Zahl mit Hilfe eines digitalen Modulationsverfahrens auf die Trägerfrequenz moduliert ist. Das Pulswiederholungsintervall kann dabei konstant sein oder von Puls zu Puls innerhalb der Burstdauer geändert werden. Das Täuschsystem, im Folgenden DRFM-System genannt, kann nur dann einen empfangenen Radarsendepuls kopieren und modifizieren, wenn dieser beim Standort des DRFM-Systems ankommt. Will ein DRFM-System einen Suchradar mit einem Täuschsignal bzw. Falschzielpuls vor dem Eintreffen des eigentlichen Radarsendepulses ein Falschziel räumlich vor dem realen Standort des Zieles vortäuschen, so muss auf die schon empfangenen Sendepulse zurückgegriffen werden. Ändert nun der Suchradar die Pulsparameter von Radarsendepuls zu Sendepuls so ist das DRFM-System nicht mehr in der Lage, Falschziele in einer Distanz kürzer als die echte Distanz zum Ziel vorzutäuschen. Dies schränkt das Vortäuschen von Falschziel-Distanzen auf das räumliche Gebiet hinter dem echten Ziel bis zur Instrumented Range, d.h. der maximalen eindeutig bestimmbaren Distanz, ein.

Das Täuschsystem bzw. DRFM-System ist typischerweise auf einem Flugobjekt installiert und besitzt eine Empfangs- und eine Senderantenne. Dies bedeutet, dass das DRFM-System physikalisch nur in einem einzigen festgelegten Ort im Raum sein kann. Das DRFM-System kann durch Side-Lobe-Jamming versuchen, dem Suchradar vorzutäuschen, dass sich das Ziel im Azimut an einem anderen Ort befindet. Side-Lobe-Jamming bedeutet, dass die Suchradar-Empfangsantenne ein Täuschsignal über ihre Antennennebenkeulen empfängt, aber das Radar annimmt, dass das empfangene Signal durch die Antennen-Hauptkeulen empfangen wurde. Da aber die Sendeantenne des DRFM-Systems sich physikalisch nur an einem Ort befinden kann, kann durch Feststellen des Ortes der Quelle des elektromagnetischen Feldes ein Täuschversuch entdeckt werden, da durch Zusammenführen der Daten der Suchradar erkennt, dass das Falschziel gar nicht in der Antennen-Hauptkeule der Suchradar-Empfangsantenne sein kann. Als Nebeneffekt besteht auch die Möglichkeit zwischen Bodenclutter und dem Ziel zu unterscheiden, wenn sich der Bodenclutter in derselben Auflösungszelle wie das Ziel befindet. Auch in diesem Fall sind die Quellen der Streuung voneinander räumlich im Azimut der Elevation getrennt.

Ein besonderer Vorteil der Erfindung ist nun der Einsatz von mindestens einem, insbesondere mehreren Peilempfängern. Diese Peilempfänger können passiv ausgestaltet sein. Der Gegner darf sogar wissen, wo die Peilempfänger stehen. Durch die physikalische Bedingung, dass die Quelle des Täuschsignals, nämlich die DRFM-Sendeantenne an einem Flugzeug befestigt ist, ist der Standort eindeutig bestimmbar. Auch wenn das DRFM-System versucht mit Hilfe von über dem Flugzeug verteilten Antennen die Phasenfront zu manipulieren, so ist aufgrund der endlichen Ausdehnung des Flugzeugs und durch den Einsatz von mehreren räumlich verteilten Peilempfängern ein räumliches Täuschen nicht oder lediglich unter theoretischen Bedingungen möglich. In der Praxis werden diese theoretischen Bedingungen nie erreicht, da viele Parameter, wie die Standorte der Peilempfänger oder die Ausrichtung der DRFM-Antennen nie aufeinander abgestimmt sein werden.

Als Suchradar wird insbesondere ein monostatisches Suchradar verwendet. Die Peilempfänger arbeiten asynchron zum monostatischen Suchradar. Eine genaue Zeitsynchronisation ist nicht nötig, da die Peilempfänger keine Laufzeit des Radarsendepulses von der Radarantenne über das Ziel bis zur Peilantennen messen müssen. Die Peilempfänger und das Suchradar empfangen die am Ziel gestreuten oder von der Täuschvorrichtung ausgesandten Empfangspulse.

Durch mehrere Abfragen wird nun ermittelt, ob es sich bei den Empfangspulsen um das gewünschte Nutzsignal oder um ein Täuschsignal handelt. Es wird zunächst überprüft, ob die Empfangspulse in einem bestimmten Zeitfenster nach dem Aussenden von dem Peilempfänger empfangen worden sind. Es wird die Laufzeit eines Signals zwischen dem mindestens einen Peilempfänger und dem Suchradar bestimmt, wobei das Zeitfenster zum Empfang des Empfangspulses aufgrund der Laufzeit und der Größe des zu überwachenden Gebietes berechnet wird. Empfangspulse, die außerhalb des Zeitfensters den jeweiligen Peilempfänger erreichen, werden nicht als Nutzsignal angesehen. Dieses Zeitfenster wird für jeden ausgesandten Puls und für jeden Peilempfänger bestimmt.

Ferner wird überprüft, ob die Empfangspulse den zugehörigen Code aufweisen. Wenn diese beiden Bedingungen erfüllt sind, so wird mittels der Peilempfänger die Empfangsrichtung des Empfangspulses bestimmt und ferner wird die Empfangsrichtung mittels des Suchradars bestimmt. Aus dem Vergleich der Empfangsrichtung kann überprüft werden, ob die Empfangspulse aus einem gemeinsamen Zielgebiet stammen. Wenn die Empfangsrichtungen alle einem Zielgebiet zugeordnet werden können, so handelt es sich nicht um ein Täuschsignal, sondern um ein Nutzsignal. Durch das dreidimensionale Peilen eines eintreffenden elektromagnetischen Feldes, nämlich der entsprechenden Empfangspulse und den daraus gemessenen Peilwerten, hat der Suchradar durch Kombinierung aller Peilwerte die Möglichkeit auch zwischen Bodenclutter und dem Ziel zu unterscheiden.

Die eingangs genannten Nachteile sind daher vermieden und entsprechende Vorteile sind erzielt.

Es gibt nun eine Vielzahl von Möglichkeiten, das erfindungsgemäße Verfahren und das Radarsystem auszugestalten und weiterzubilden. Hierfür darf zunächst auf die dem Patentanspruch 1 nachgeordneten Patentansprüchen verwiesen werden. Im Folgenden wird anhand der Zeichnung und der dazugehörigen Beschreibung die Erfindung näher erläutert. In der Zeichnung zeigt:
- Fig. 1-1 bis 1-5: jeweils ein Diagramm, in dem eine Signalstärke über der Zeit aufgetragen ist und der zeitliche Verlauf eines versuchten Täuschvorganges dargestellt ist,
- Fig. 2: ein Radarsystem mit einem Suchradar und mit mehreren Peilempfängern,
- Fig. 3: ein Diagramm, wobei zwei Pulse über die Zeit aufgetragen sind, und
- Fig. 4: eine Anordnung des Radarsystems und eines Zieles sowie des Suchradars und eines Peilempfängers.

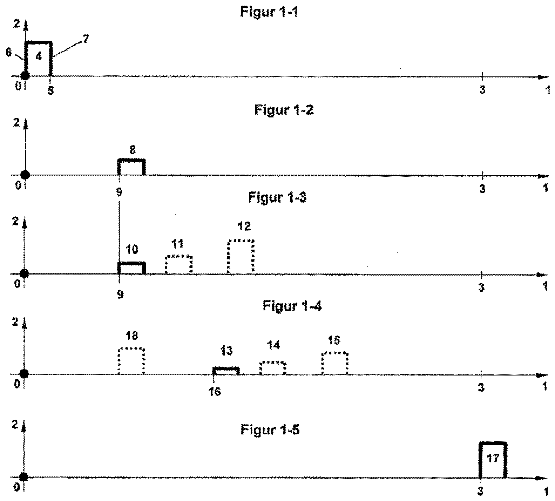

Anhand der Fig. 1-1 bis 1-5 wird der zeitliche Verlauf eines Täuschvorgangs dargestellt. Dargestellt ist jeweils eine Zeitachse 1, die von einem Startpunkt 0 ausgeht. Die aufragende Achse 2 bezeichnet die Signalstärke. Auf der Zeitachse 1 ist ein Pulsrepetitionsintervall 3 (PRI) eingezeichnet. Das PRI 3 bezeichnet den Zeitpunkt für die Aussendung eines folgenden zweiten, weiteren Radarsendepulses, welcher von der Radar-Sendesuchantenne ausgesandt wird.

Das Diagramm in Fig. 1-1 betrachtet den Standort der Sendesuchantenne. Das Suchradar sendet über die Sendesuchantenne ein Radarsendepuls 4 mit der Pulsdauer T_puls 5 aus. Der Radarsendepuls 4 weist eine ansteigende Flanke 6 und eine abfallende Flanke 7 auf.

Das Diagramm in Fig. 1-2 betrachtet den Standort am Ziel. Der Radarsendepuls 8 erreicht das Ziel nach der Zeit T_weg 9. Gegeben durch die Wellenausbreitungsbedingungen hat sich die Signalstärke gegenüber dem Radarsendepuls 4 bei der Sendesuchantenne verkleinert. Das DRFM-System, welches am Ziel, z.B. an einem Flugzeug, befestigt ist, empfängt den ankommenden Radarsendepuls 8 und beginnt mit der Verarbeitung des Radarsendepulses 8.

In Fig. 1-3 ist nun ebenfalls der Standort am Ziel dargestellt. Aus dem gesendeten Radarsendepuls 8 wird durch Strahlung bzw. Reflektion am Ziel ein Echopuls 10 erzeugt. Dieser Echopuls 10 wird als "echtes Nutzsignal" bezeichnet. Weiter werden Täuschsignale 11, 12 durch das DRFM-System erzeugt und in Richtung der Empfangssuchantenne des Radarsystems gesendet. Die Erzeugung und Aussendung der Täuschsignale 11, 12 geschieht im selben PRI.

In Fig. 1-4 ist nun der Standort der Empfangssuchantenne dargestellt. Es werden die Pulse 13, 14 und 15 empfangen, wobei der Puls 13 das gewünschte Nutzsignal für die Distanzmessung zum Ziel darstellt. Aus der gemessenen Zeit 16 von 2x T_weg wird bei Eintreffen des echten Nutzsignals 13 die mögliche Distanz errechnet. Der Empfänger wird auch die beiden Täuschsignale 14, 15 empfangen und ebenfalls zwei Distanzen errechnen. Diese Täuschsignale 14, 15 täuschen vor, dass zwei zusätzliche Ziele vorhanden sind, die in Wirklichkeit nicht existieren. Gegeben durch die Wellenausbreitungsbedingungen hat sich die Signalstärke verkleinert. Ist das Puls-Sendemuster des Radarsystems aus Sicht des DRFM-Systems vorhersagbar, kann auch ein Täuschsignal 18 vom DRFM-System vor dem eigentlichen Nutzsignal 13 ausgesandt werden, wenn es ein Ziel vor dem echten Ziel vortäuscht.

Fig. 1-5 zeigt nun wiederum den Standort der Sendesuchantenne. Der Suchradar sendet hier über die Sendesuchantenne einen weiteren Sendepuls 17 zum Zeitpunkt PRI 3 aus. Der Zyklus beginnt vom Neuen.

Die in den Fig. 1-1 bis 1-5 dargestellten Zusammenhänge sind so für den Empfang über die Antennen-Hauptkeule der Radar-Empfangsantenne als auch über die Antennen-Nebenkeulen gültig. Somit ist ein DRFM-System grundsätzlich auch in der Lage, neben der Distanz auch die Richtung eines Ziels in Bezug auf das Radarsystem zu täuschen.

Um diese Nachteile zu vermeiden, wird nun erfindungsgemäß ein Verfahren vorgeschlagen, bei welchem ein Einsatz eines oder mehrerer DRFM-Systeme und auch der Einsatz eines Rausch- / Schmalband-Störers erkannt und deren Einfluss auf die Funktionsweise des Suchradars minimiert werden kann.

Das Verfahren nutzt drei Aspekte eines solchen DRFM-Täuschsystems aus:
Der erste Aspekt betrifft die zeitliche Kausalität. Das DRFM-System kann nur dann einen empfangenen Radarsendepuls kopieren und/oder modifizieren, wenn dieser Radarsendepuls beim Standort des DRFM-Systems ankommt. Will ein DRFM-System einem Suchradar mit einem Täuschsignal vor dem Eintreffen des eigentlichen Radarsendepulses ein Falschziel räumlich vor dem realen Standort des Zieles vortäuschen, so muss auf die schon empfangenen Radar-Sendepulse zurückgegriffen werden. Ändert nun der Radar die Pulsparameter von Sendepuls zu Sendepuls, so ist das DRFM-System nicht mehr in der Lage, Falschziele in einer Distanz kürzer als die echte Distanz zum Ziel vorzutäuschen. Dies schränkt das Vortäuschen von Falschziel-Distanzen auf das räumliche Gebiet hinter dem echten Ziel bis hin zur Instrumented-Range, nämlich der maximal eindeutig bestimmbaren Distanz ein.

Ein zweiter Aspekt des Verfahrens betrifft, dass die DRFM-Sendeantenne an einem physikalisch eindeutigen Ort angeordnet ist. Das DRFM-System ist insbesondere an einem Flugobjekt angeordnet und besitzt eine Empfangs- und eine Sendeantenne. Dies bedeutet, dass das DRFM-System physikalisch nur an einem einzig festgelegten Ort im Raum angeordnet sein kann. Unter dem Begriff Side-Lobe-Jamming wird verstanden, dass die Suchradar-Empfangsantenne ein Täuschsignal über die Antennennebenkeulen empfängt, aber das Radar annimmt, dass das Empfangssignal durch die Antennen-Hauptkeule empfangen wurde. Durch solches Side-Lobe-Jamming kann versucht werden, dass das DRFM-System dem Suchradar vortäuscht, dass sich das Ziel im Azimut an einem anderen Ort befindet. Da aber die Sendeantenne des DRFM-Systems sich physikalisch nur an einem Ort befinden kann, kann durch Feststellen des Ortes der Quelle des elektromagnetischen Feldes ein Täuschversuch entdeckt werden, da durch Zusammenführen der Daten des Suchradars und ggf. von weiteren Peilempfängern erkennbar ist, dass das Täuschziel gar nicht in der Antennen-Hauptkeule der Suchradar-Empfangsantenne sein kann. Als Nebeneffekt besteht auch die Möglichkeit, zwischen Bodenclutter und einem Ziel zu unterscheiden, wenn sich der Bodenclutter in derselben Auflösungszelle wie das Ziel befindet. Auch in diesem Fall sind die Quellen der Streuung voneinander räumlich im Azimut und in der Elevation getrennt.

Ein dritter Aspekt des Verfahrens betrifft die Verwendung eines zufälligen Codes oder einer zufällig variierten Signalform. Insbesondere können Zufallszahlen verwendet werden. Der Suchradar wählt zufällig ein Code mit Hilfe eines Zufallsgenerators aus. Der Suchradar wählt zufällig, insbesondere eine binäre Zahl mit N Stellen mit Hilfe eines Zufallsgenerators aus. Somit hat der Suchradar aus 2^{N}-M binären Zahlen die Wahl. M ist die Anzahl der binären Zahlen, welche innerhalb einer gewissen Zeitberührung schon gewählt worden sind. Ist somit eine binäre Zahl gewählt und wird für ein Pulsrepetitionsintervall genutzt, so soll diese erst nach einer gewissen Zeit wieder wählbar sein. Wird N groß gewählt und sei M klein, z.B. N=7 und M=2, so ergibt sich für jedes Pulsrepetitionsintervall (PRI) eine Anzahl wählbarer binärer Zahlen von 126. Dabei wird die schon gewählte Zahl für die Dauer von M=2 Pulsrepetitionsintervallen gesperrt, kann aber auch nach dem zweiten Pulsrepetitionsintervall wieder gewählt werden. Ist die Zahl N genügend groß gewählt, so kann diese sogar öffentlich bekannt sein, d.h. der Gegner darf diese Zahl wissen. Hingegen kann M eine geheime feste Größe sein oder auch mit einem Zufallsgenerator im Suchradar bestimmt werden. Es muss aber immer M > 1 gelten. Mit dieser Maßnahme ist das Pulsrepetitionsintervall (PRI) immer mit einer eindeutige Nummer versehen und alle Pulse, welche diesem Pulsrepetitionsintervall angehören, können diesem Pulsrepetitionsintervall (PRI) und somit mit einer zeitlichen Gültigkeit zugeordnet werden.

Als weitere Ausgestaltung kann jeder Zufallszahl eine besondere Signalform zugeordnet werden. Diese Signalformen sind so zu wählen, dass diese orthogonal zueinander sind. Somit kann der Empfänger mit Hilfe eines signalangepassten Filters die besonderen Signalformen aus einer Fülle von anderen empfangenen Signalformen extrahieren. Damit lassen sich auch Mehrwegausbreitungseffekte soweit bearbeiten, dass das erwünschte empfangene Signal zeitlich von den anderen empfangenen Signalen gleicher Form getrennt werden kann. Es ist denkbar, sowohl unterschiedliche Signalformen als auch unterschiedliches Codes gleichzeitig einzusetzen. Es ist jedoch auch möglich, nur unterschiedliche Codes oder nur unterschiedliche Signalformen einzusetzen.

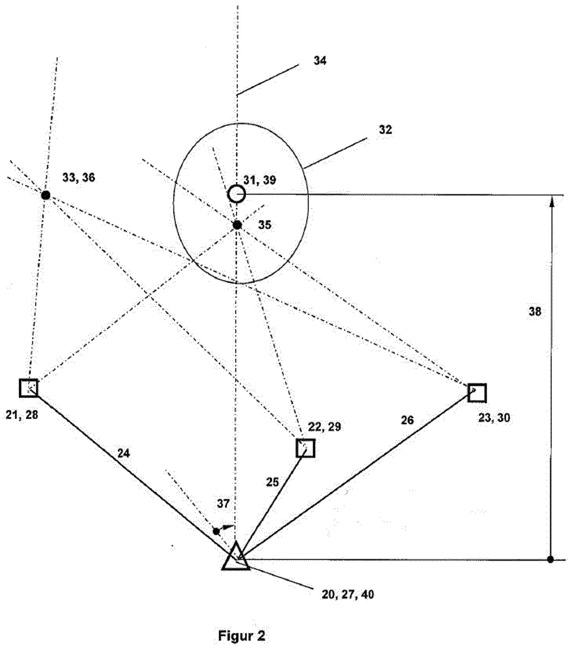

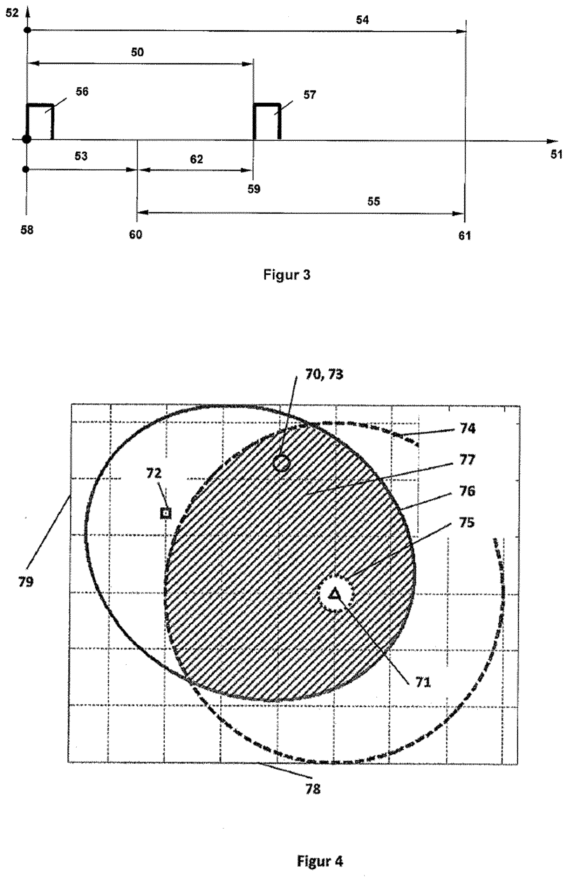

Die Einzelheiten des Verfahrens dürfen nun anhand der Fig. 2 und 3 näher erläutert werden.

In Fig. 2 sind ein monostatischer Suchradar 20 und mehrere Peilempfänger 21, 22, 23 dargestellt. Die Anzahl P der Peilempfänger 21, 22, 23 kann größer als drei gewählt werden. Mindestens ist ein Peilempfänger vorhanden, vorzugsweise sind drei oder mehrere Peilempfänger 21, 22, 23 vorhanden. Es ist denkbar, zwei Peilempfänger zu verwenden. Die drei Peilempfänger 21, 22, 23 haben eine direkte Sicht in das zu überwachende Gebiet 77 (Fig. 4).

Fig. 4 zeigt das Gebiet 77 in welchen das Ziel sein muss, damit der Suchradar 71 und ein Peilempfänger 72 die Zielposition 73 bestimmen können. Dabei ist die Kurve 74 für die maximale Distanz zwischen dem Suchradar 71 und dem Ziel 70 durch die "Instrumented Range" vorgegeben, welche vom Pulswiederholungsintervall abhängt. Die Kurve 75 umschließt jenes Gebiet, in welchem der Suchradar 20 das Ziel nicht erfassen kann, da die Aussendung des Suchradarimpulses nicht beendet ist. Die Kurve 76 ist durch die Position des Suchradars 71 und des Peilempfängers 72 so bestimmt, dass die maximale Signallaufzeit die Kurve 76 definiert. Das Gebiet 77 ist durch die Überlappung zwischen dem Gebiet innerhalb der Kurve 74, außerhalb der Kurve 75 und innerhalb der Kurve 76 gebildet. Ferner sind eine X-Achse 78 und Y-Achse 79 eingezeichnet.

Der Suchradar 20 hat mehrere bestimmte Eigenschaften. Der Suchradar 20 ist vorzugsweise ein monostatischer Puls-Doppler-Suchradar. Die Radarsendeantenne ist am selben Ort wie die Radarempfangsantenne angeordnet. Es ist sogar möglich, dass dieselbe Antenne als Sendeantenne und auch als Empfangsantenne zum Einsatz gelangt.

Die Radarempfangsantenne des Suchradars zeichnet sich dadurch aus, dass sie eine Antennen-Hauptkeule mit mehreren Antennennebenkeulen besitzt. Der maximale Antennengewinn der Antennen-Hauptkeule ist viel größer als jene der Antennennebenkeulen. In der Praxis kann von einem typischen Antennengewinnunterschied von 20 dB bis 40 dB ausgegangen werden. Weiter ist der -3 dB-Öffnungswinkel der Antennen-Hauptkeule klein gewählt, damit durch Schwenken der Antennencharakteristik der Radarempfangsantenne ein schmaler Sektor überwacht werden kann. Es wird immer angenommen, dass ein empfangener Radarpuls von einem realen Ziel aus diesem Sektor stammt. Mit Messung des Azimutwinkels 37 (vgl. Fig. 2) der Hauptachse 34 der Antennen-Hauptkeule der Radarempfangsantenne wird die Richtung zum angenommenen Ziel bestimmt. Die Schwenkung der Antennen-Hauptkeule kann elektronisch gesteuert und durch mechanisches Drehen der Antenne herbeigeführt werden.

Der Suchradarsender wählt aus 2^{N}-M möglichen N-stelligen binären Zahlen zufällig eine aus und moduliert den Sendepuls mit dieser Zahl unter Anwendung eines digitalen Modulationsverfahrens oder wählt die entsprechende Signalform. Dabei soll in diesem Beispiel die Trägerfrequenz f_{Sender} für alle Pulse konstant sein. Wird aufgrund einer Veränderung des Radarrückschlagquerschnitts der Einsatz mehrerer Sendefrequenzen nötig, um die Wahrscheinlichkeit einer Zieldetektion zu erhöhen, kann die Anzahl der Trägerfrequenzen erhöht werden. Dabei soll eine Anzahl von K=4 als typischer Nennwert gelten. Die Verwendung mehrerer Frequenzen ist auch als Frequency-Diversity bekannt und dient allein der Erhöhung der Zieldetektionswahrscheinlichkeit bei stark fluktuierendem Radarrückstrahlquerschnitt der Ziele. Da heutige Störer in der Lage sind, ein breites Frequenzband simultan mit einem Rauschsignal zu stören, sind Frequenzwechsel und elektronische Gegenmaßnahmen nicht mehr anwendbar. In diesem Sinne genügt nur eine Sendefrequenz, um die Ausführung des Systems einfach zu halten.

Der Suchradarsender erzeugt einen Burst, bestehend aus Q Pulsen. Jeder Puls ist mit einer anderen, zufällig gewählten binären Zahl mit Hilfe des digitalen Modulationsverfahrens auf die in der Sender- bzw. Trägerfrequenz f_{Sender} moduliert. Das Pulswiederholungsintervall kann konstant sein oder von Puls zu Puls innerhalb der Burstdauer geändert werden.

Der Suchradarempfänger empfängt alle vom Ziel zurückgesteuerten Pulse eines Bursts und verarbeitet diese burstweise. Dabei wird neben der eigentlichen Puls-Doppler-Verarbeitung auch die Information der binären Zahl demoduliert und pro Puls abgespeichert. Es besteht auch die Möglichkeit, das modulierte Empfangssignal einer Pulskompressionsverarbeitung zu unterziehen.

Der Suchradar 20 besitzt jeweils einen Sender für das Aussenden und ein Empfänger zum Empfang eines Signals mit der Trägerfrequenz f_{Trigger}. Es gilt immer, dass die Trägerfrequenz f_{Trigger} verschieden ist von der Sendefrequenz f_{Sender}. Zwischen dem Suchradar 20 und dem Peilempfänger 21, 22, 23 besteht eine drahtlose und/oder eine drahtgebundene, störresistente Verbindung 24, 25, 26.

Die Peilempfänger 21, 22, 23 haben folgende Eigenschaften. Jeder Peilempfänger 21, 22, 23 besitzt eine Peilantenne für den gerichteten Empfang von Signalen im Azimutwinkelbereich von 360° und im Elevations-Winkelbereich von +/- 90°. Ein Winkel von 0° in der Elevation wird als Richtung zum Horizont verstanden. Je nach Situation, wenn kein Bodenclutter unterdrückt werden soll, genügt aber auch ein Azimutwinkelbereich von 360° ohne Winkelauflösung im Elevationsbereich. Jeder Peilempfänger 21, 22, 23 ist so ausgelegt, dass über die Peilantennen ein Signal mit der Trägerfrequenz f_{Sender} + f_{Doppler} empfangen kann. Die Dopplerfrequenz f_{Doppler} befindet sich in einem vordefinierten Frequenzbereich. Dies ist vor Beginn des Einsatzes mit dem Suchradar 20 anhand des zu überwachenden Gebietes und der potenziellen Zieleigenschaften definiert. Jeder Peilempfänger 21, 22, 23 besitzt einen Sender und einen Empfänger für das Aussenden und Empfangen eines Signals mit der Trägerfrequenz f_{Trigger} und ist mit dem Suchradar 20 über eine drahtlose oder drahtgebundene Verbindung 24, 25, 26 verbunden.

Im Folgenden darf der Ablauf des Verfahrens nun näher beschrieben werden.

Der Suchradar 20 wird an einem Ort 27 aufgestellt. Die Peilempfänger werden an den Orten 28, 29 und 30 aufgestellt. Die Orte 28, 29, 30 sind beabstandet zueinander. Die Orte 28, 29, 30 sind beabstandet zum Ort des Suchradars 20. Die Orte 28, 29, 30 werden bestimmt beispielsweise mittels GPS. Es werden die Orte 27, 28, 29 und 30 in einer Karte 40 eingezeichnet. Danach werden die drahtlosen oder drahtgebundenen Verbindungen 24, 25, 26 zwischen dem Suchradar 20 und dem Peilempfänger 21 bis 23 erstellt. Diese Verbindung 24, 25, 26 sind nicht störbar bzw. störresistent. Der Suchradar 20 sendet nun jedem Peilempfänger 21, 22, 23 ein Signal mit der Frequenz f_{Trigger} über die Verbindung 24, 25 und 26 zu. Jeder Peilempfänger 21, 22 und 23 sendet ohne Verzögerung das vom Suchradar 20 empfangene Signal mit der Frequenz f_{Trigger} unverändert zum Suchradar 20 über die Verbindung 24, 25, 26 zurück. Der Suchradar 20 misst nun die Zeit zwischen dem Senden und Empfangen der Signale, welche die Trägerfrequenzen f_{Trigger} besitzen und über die Verbindung 24, 25, 26 zu den Peilempfängern gelangt sind. Diese Zeiten werden nun für jeden einzelnen Peilempfänger 21, 22 und 23 halbiert. Die erhaltenen Werte sind die Verzögerungszeiten, welche für die Übermittlung von Signalen mit der Trägerfrequenz f_{Trigger} vom Suchradar 20 zu den jeweiligen Peilempfängern 21, 22, 23 über die Verbindung 24, 25, 26 einzurechnen sind. Somit werden die Verzögerungszeiten bei der Übermittlung zwischen dem Suchradar 20 und den Peilempfängern 21, 22, 23 bestimmt. In Fig. 3 ist für einen exemplarischen Peilempfänger die Verzögerungszeit 50 dargestellt. Dabei ist als x-Achse die Zeit 51 und als y-Achse der Signalpegel 52 dargestellt. Ein Puls 56 wird zum Zeitpunkt 58 von dem Suchradar 20 an die Peilempfänger 21, 22, 23 gesendet mit der Frequenz f_{Trigger}. Zum selben Zeitpunkt 58 sendet der Suchradar 20 einen modulierten Radar-Sendepuls mit der Trägerfrequenz f_{Sender} über die Radar-Sendeantennen aus. Die Peilempfänger 21, 22, 23 empfangen einen entsprechenden Puls 57 mit der Frequenz f_{trigger} zum Zeitpunkt 59. Der Zeitpunkt 59 ergibt sich somit aus der Summe des Zeitpunkts der Aussendung 58 zuzüglich der Verzögerungszeit 50. Die Verzögerungszeit 50 wird vom Suchradar 20 an die Peilempfänger 21, 22, 23 übermittelt.

Der Suchradar 20 definiert das zu überwachende Gebiet 77 (vgl. Fig. 4) für jeden Peilempfänger 21, 22, 23 bzw. 72 (vgl. Fig. 4). Jeder Peilempfänger 21, 22, 23 errechnet daraus die minimale Zeitdauer 53 und die maximale Zeitdauer 54 für die Ausbreitung eines Radarsendepulses welcher von der Radarsendeantenne der Suchantenne ausgesandt, am Ziel Richtung Peilempfänger 21, 22, 23 gestreut und von der Peilantenne 21, 22, 23 empfangen wird. Diese beiden Zeitdauern definieren die Zeitperiode 55, in der der entsprechende Peilempfänger 21, 22, 23 einen gestreuten Puls mit dem Code zu erwarten hat. Bevorzugt soll die Zeitperiode 55 einem Pulswiederholungsintervall entsprechen. Empfängt der Peilempfänger einen Puls, welcher nicht den aktuellen Code als Information oder die aktuelle Signalform aufweist, so wird der Puls vom Peilempfänger 21, 22, 23 nicht weiter verarbeitet. Die Zeitperiode 55 beginnt zum Zeitpunkt 60 und endet zum Zeitpunkt 61. Die Zeitdauer 62 ist die Differenz zwischen der Verzögerungszeit 50 und der minimalen Zeitdauer 53. Der Zeitpunkt 61 ist die Summe des Zeitpunkts 60 und der Zeitperiode 55.

Der Suchradar 20 beginnt mit dem Aussenden eines Burst, in dem für jeden Puls des Bursts eine zufällig gewählte N stellig binäre Zahl aus einer Menge von 2^{N}-M binären Zahlen ausgewählt wird und moduliert jeden Puls mit dieser Zahl mit einem digitalen Modulationsverfahren. Die Trägerfrequenz beträgt f_{Sender}.

Bei jedem Aussenden eines Pulses sendet der Suchradar 20 an die Peilempfänger 21, 22, 23 Signale in Form eines Pulses 56 (vgl. Fig. 3) mit der Trägerfrequenz f_{Trigger} in Bezug auf Informationen über die aktuell gültige binäre Zahl bzw. den aktuell gültigen Code. Anhand der Empfangszeit 59 und der vorher gemessenen Verzögerungszeit 50 und zusammen mit der minimalen Zeitdauer 53 und der berechneten Zeitperiode 55 werden für die aktuellen Codes bzw. für die aktuellen Zahlen gültige Zeitfenster, nämlich die Zeitpunkte 60 und 61 berechnet.

Jeder Puls wird an einem echten Ziel 31 gestreut. Innerhalb der entsprechenden Zeitfenster empfangen die Peilempfänger 21, 22, 23 alle Pulse mit der Trägerfrequenz f_{Sender} + f_{Doppler}. Diejenigen Pulse welche als Information die aktuell binäre Zahl aufweisen werden bei der weiteren Signalverarbeitung berücksichtigt. Alle anderen Pulse werden nicht weiterverarbeitet.

Die Peilempfänger 21, 22, 23 bestimmen für jeden gültigen Puls die Empfangsrichtung in der Azimut- und Elevationsrichtung und übermitteln die Peilwerte zusammen mit der demodulierten Information über den Code bzw. über die binäre Zahl und ihrer Identifikationsnummer an den Suchradar 20.

Der Suchradar 20 sammelt alle Peilwerte für einen Burst für die jeweils gültigen binären Zahlen.

Der Suchradar 20 bestimmt für jeden Peilempfänger am Standort 28, 29, 30, welcher durch eine Identifikationsnummer gekennzeichnet ist, und für jede binäre Zahl bzw. für jeden Code Geraden durch den Standort in Richtung der Empfangsrichtung der Peilwerte. Einige Geraden schneiden sich unter idealen Bedingungen in einem Punkt bzw. an dem Zielgebiet 33, 35. Andere Geraden haben keinen gemeinsamen Schnittpunkt. Ob die Geraden sich hier hinreichend nahe kommen, kann durch eine Berechnung des Abstands der Geraden bestimmt werden. Wenn der Abstand der Geraden kleiner als eine bestimmte Größe ist, so kann davon ausgegangen werden, dass diese Geraden einem Zielgebiet 33, 35 zugeordnet werden. Andere Geraden haben keinen gemeinsamen Schnittpunkt bzw. schneiden sich nicht in einem Zielgebiet. Für diese Geraden ist nicht dieselbe Quelle gepeilt worden und diese Fälle werden nicht weiter beachtet. Wenn die Geraden sich in einem gemeinsamen Zielgebiet schneiden, dann kann davon ausgegangen werden, dass es sich um das gleiche Ziel handelt.

Der Suchradar 20 bestimmt nun eine Gerade 34 durch seinen Standpunkt 27 im Neigungswinkel des Azimutwinkels 37 und gültig für den jeweiligen Puls mit der entsprechenden binären Zahl. Zudem trägt der Suchradar 20 die gemessene Distanz, welche durch die Laufzeitmessung des Sendepulses entstanden ist, auf der Geraden ab und markiert eine Toleranzzone 32, um den neuerhaltenen Punkt 39 herum auf der Geraden. Diese Toleranzzone 32 bildet ein weiteres Zielgebiet. Liegt nun ein Schnittpunkt 35 gültig für die entsprechende binäre Zahl innerhalb der Toleranzzone 32, so handelt es sich um ein echtes Ziel 31. Liegt der entsprechende Schnittpunkt 33 bzw. das Zielgebiet 33 der drei Geraden nicht in der Toleranzzone 32, so stimmt der Ort der Quelle des elektromagnetischen Feldes nicht mit der Messung des Suchradars überein. Es kann angenommen werden, dass ein DRFM-System entweder über die Antenne-Hauptkeule oder über die Antennenebenkeule der Radarempfangsantenne versucht, den Suchradar 20 zu täuschen. Der Suchradar 20 kann nun zwischen echten Zielen 31 und falschen Zielen 36 unterscheiden.

Wird der Suchradar 20 durch ein Rausch- oder Schmalbandstörer in seiner Funktion beeinträchtigt, so schaltet der Suchradar 20 auf reinen Peilbetrieb um. Die Peilempfänger 28, 29 oder 30 peilen den Störer und teilen ihre Peilwerte dem Suchradar 20 mit. Der Suchradar 20 zeichnet wieder die drei Geraden ein und findet einen Schnittpunkt. Somit ist der Suchradar 20 in der Lage, den Störer zu detektieren und die Position zu bestimmen und zu verfolgen.

Durch dieses Verfahren ergeben sich mehrere Vorteile.

Der Einsatz von passiven Peilempfängern ist vorteilhaft. Der Gegner darf wissen, wo die Peilempfänger 21, 22, 23 stehen.

Durch die physikalische Bedingung, dass die Quelle des Täuschsignals die DRFM-Sendeantenne ist und diese an einem Flugzeug befestigt ist, ist der Standort eindeutig festgelegt. Auch wenn das DRFM-System versucht, mit Hilfe von über den Flugzeug verteilten Antennen die Phasenfront zu manipulieren, so ist aufgrund der endlichen Ausdehnung des Flugzeugs und durch den Einsatz von mehreren räumlich verteilten Peilempfängern 21, 22, 23 ein räumliches Täuschen nicht oder nur unter ganz bestimmten theoretischen Bedingungen möglich. In der Praxis werden diese Bedingungen nie erreicht, da viele Parameter, wie die Standorte der Peilempfänger 21, 22, 23 oder die Ausrichtung der DRFM-Antennen, nie aufeinander abgestimmt sein werden.

Die Peilempfänger 21, 22, 23 arbeiten asynchron zum Suchradar. Eine genaue Zeitsynchronisation ist nicht nötig, da die Peilempfänger 21, 22, 23 keine Laufzeit des Radarsendepulses von der Radarsendeantenne über das Ziel bis zur Peilantenne messen müssen.

Durch eine zufällige Bestimmung eines Codes oder der entsprechenden Signalform kurz vor dem Aussenden des Radarsendepulses ist für ein DRFM-System nicht vorhersehbar, welche Pulsparameter für den nächsten Puls gültig sein werden. Das DRFM-System muss sich für jedes Pulswiederholungsintervall (PRI) auf die neue Situation einstellen. Zugleich können die Peilempfänger 21, 22, 23 anhand des Codes die empfangenen Pulse zu einem Pulswiederholungsintervall zuordnen. Pulse welche zu spät, d.h. außerhalb einer bestimmten Zeitperiode bei den Peilempfängern 21, 22, 23 ankommen, können so erkannt und ausgesondert werden. Diese Pulse stammen entweder von Überreichweitenzielen oder von einem DRFM-System.

Durch das dreidimensionale Peilen eines eintreffenden elektromagnetischen Feldes und den daraus gemessenen Peilwerten hat der Suchradar 20 mit Kombinierung aller Peilwerte der Peilempfänger 21, 22, 23 die Möglichkeit, auch zwischen Bodenclutter und dem Ziel zu unterscheiden.

Es genügt, dass der Suchradar 20 nur eine Trägerfrequenz f_{Sender} für den Radarsendepuls benutzt. Es können auch mehrere Trägerfrequenzen aus Frequency-Diversity Gründen für die Erzielung einer höheren Detektionswahrscheinlichkeit eingesetzt werden. Ansonsten ist nur eine Trägerfrequenz f_{Sender} nötig. Damit wird der Aufbau des Suchradarsvereinfacht, da nur eine Trägerfrequenz f_{Sender} verwendet, welche auch als Sendefrequenz bekannt ist. Das Radarsystem wird einfacher und damit auch preislich günstiger.

### Bezugszeichenliste:

- 0: Startpunkt
- 1: Zeitachse
- 2: Achse der Signalstärke
- 3: PRI / Pulsrepetitionsinterverall
- 4: Radarsendepuls
- 5: Pulsdauer
- 6: ansteigende Flanke
- 7: abfallende Flanke
- 8: Radarsendepuls
- 9: Zeit T_weg
- 10: Echopuls (Nutzsignal)
- 11: Täuschsignal
- 12: Täuschsignal
- 13: Puls (Nutzsignal)
- 14: Puls (Täuschsignal)
- 15: Puls (Täuschsignal)
- 16: Zeit = 2x T_weg
- 17: Sendepuls
- 18: Täuschpuls
- 20: Suchradar
- 21: Peilempfänger
- 22: Peilempfänger
- 23: Peilempfänger
- 24: Verbindung
- 25: Verbindung
- 26: Verbindung
- 27: Ort des Suchradars
- 28: Ort eines Peilempfängers
- 29: Ort eines Peilempfängers
- 30: Ort eines Peilempfängers
- 31: echtes Ziel
- 32: Toleranzzone
- 33: Zielgebiet / Schnittpunkt
- 34: Hauptachse
- 35: Zielgebiet / Schnittpunkt
- 36: falsches Ziel
- 37: Azimutwinkel
- 38: gemessene Distanz
- 39: Punkt
- 50: Verzögerungszeit
- 51: Zeitachse
- 52: Achse mit Signalpegel
- 53: minimale Zeitdauer
- 54: maximale Zeitdauer
- 55: Zeitperiode
- 56: Triggerpuls
- 57: Triggerpuls
- 58: Zeitpunkt (Suchradar sendet Triggerpuls)
- 59: Zeitpunkt (Peilempfänger empfängt Triggerpuls)
- 60: Zeitpunkt
- 61: Zeitpunkt
- 62: Zeitdauer (Differenz zwischen Verzögerungszeit und der minimalen Zeitdauer)
- 70: Ziel
- 71: Suchradar
- 72: Peilempfänger
- 73: Zielposition
- 74: Kurve maximale Distanz
- 75: Gebiet in dem das Ziel nicht erfassbar ist
- 76: Kurve der maximalen Signallaufzeit
- 77: zu überwachendes Gebiet
- 78: X-Achse
- 79: Y-Achse

## Patentansprüche

1. Verfahren zum Betreiben eines Radarsystems zur Vermeidung von Täuschungen durch Dritte, wobei eine Verbindung (24, 25, 26) zwischen mindestens einem Peilempfänger (21, 22, 23) und einem Suchradar (20) bereitgestellt wird, wobei von dem Suchradar (20) mehrere Pulse mit unterschiedlichen Codes gesendet und/oder mit unterschiedlichen Signalformen gesendet werden, wobei die Peilempfänger (21, 22, 23) und das Suchradar (20) an einem Ziel gestreute Pulse empfangen, wobei überprüft wird, ob diese Empfangspulse an einem Ziel gestreut sind und damit ein Nutzsignal bilden oder durch Täuschsignale (11, 12) gebildet sind, wobei mittels des mindestens einen Peilempfängers (21, 22, 23) und des Suchradars (20) Empfangsrichtungen der Empfangspulse bestimmt werden, wobei überprüft wird, ob die Empfangsrichtungen einem gemeinsamen Zielgebiet (33, 35) zugeordnet werden können und somit ein Nutzsignal bilden oder keinem gemeinsamen Zielgebiet zugeordnet sind und somit ein Täuschsignal (11, 12) bilden, wobei überprüft wird, ob der Empfangspuls in einem bestimmten Zeitfenster nach dem Aussenden des Sendepulses von dem Peilempfänger (21, 22, 23) und vom Suchradar (20) empfangen worden ist, wobei die Laufzeit eines Signals zwischen dem mindestens einen Peilempfänger (21, 22, 23) und dem Suchradar (20) bestimmt wird, wobei das Zeitfenster zum Empfang des Empfangspulses aufgrund der Laufzeit und der Größe des zu überwachenden Gebietes berechnet wird.

2. Verfahren nach einem der vorstehenden Ansprüche, **dadurch gekennzeichnet, dass** die Codes zufällig erzeugt werden.

3. Verfahren nach einem der vorstehenden Ansprüche, **dadurch gekennzeichnet, dass** alle Codes innerhalb von M Pulsrepetitionsintervallen unterschiedlich gewählt werden, wobei M größer gleich 2 ist.

4. Verfahren nach einem der vorstehenden Ansprüche, **dadurch gekennzeichnet, dass** die Signalform zufällig gewählt und von Sendepuls zu Sendepuls variiert wird.

5. Verfahren nach einem der vorstehenden Ansprüche, **dadurch gekennzeichnet, dass** eine konstante Trägerfrequenz für alle Sendepulse verwendet werden.

6. Verfahren nach einem der vorstehenden Ansprüche, **dadurch gekennzeichnet, dass** mehrere Peilempfänger (21, 22, 23) verwendet werden.

7. Radarsystem zur Ausführung des Verfahrens nach einem der vorstehenden Ansprüche, mit einem Suchradar (20) und mit mindestens einem Peilempfänger (21, 22, 23) und mit einem Zufallsgenerator zur Erzeugung von unterschiedlichen Codes und/oder zur Auswahl von unterschiedlichen Signalformen, wobei eine Verbindung (24, 25, 26) zwischen dem mindestens einen Peilempfänger (21, 22, 23) und dem Suchradar (20) bereitgestellt ist, wobei von dem Suchradar (20) mehrere Pulse mit unterschiedlichen Codes gesendet und/oder mit unterschiedlichen Signalformen gesendet werden, wobei die Peilempfänger (21, 22, 23) und das Suchradar (20) an einem Ziel gestreute Pulse empfangen, wobei überprüft wird, ob diese Empfangspulse an einem Ziel gestreut sind und damit ein Nutzsignal bilden oder durch Täuschsignale (11, 12) gebildet sind, wobei mittels des mindestens einen Peilempfängers (21, 22, 23) und des Suchradars (20) Empfangsrichtungen der Empfangspulse bestimmt werden, wobei überprüft wird, ob die Empfangsrichtungen einem gemeinsamen Zielgebiet (33, 35) zugeordnet werden können und somit ein Nutzsignal bilden oder keinem gemeinsamen Zielgebiet zugeordnet sind und somit ein Täuschsignal (11, 12) bilden, wobei überprüft wird, ob der Empfangspuls in einem bestimmten Zeitfenster nach dem Aussenden des Sendepulses von dem Peilempfänger und vom Suchradar empfangen worden ist, wobei die Laufzeit eines Signals zwischen dem mindestens einen Peilempfänger (21, 22, 23) und dem Suchradar (20) bestimmt wird, wobei das Zeitfenster zum Empfang des Empfangspulses aufgrund der Laufzeit und der Größe des zu überwachenden Gebietes berechnet wird.

8. Radarsystem nach Anspruch 7, **dadurch gekennzeichnet, dass** das Suchradar (20) als monostatisches Suchradar (20) ausgebildet ist.

## Claims

1. Method for operating a radar system to prevent deception by third parties, wherein a connection (24, 25, 26) is provided between at least one direction-finding receiver (21, 22, 23) and a search radar (20), wherein multiple pulses with different codes and/or with different signal waveforms are transmitted by the search radar (20), wherein the direction-finding receivers (21, 22, 23) and the search radar (20) receive pulses scattered at a target, wherein a check is carried out of whether these reception pulses are scattered at a target and thus form a useful signal or are formed by deception signals (11, 12), wherein by means of the at least one direction-finding receiver (21, 22, 23) and the search radar (20) reception directions of the reception pulses are determined, wherein a check is carried out of whether the reception directions can be associated with a common target area (33, 35) and thus form a useful signal or are not associated with a common target area and thus form a deception signal (11, 12), wherein a check is carried out of whether the reception pulse was received by the direction-finding receiver (21, 22, 23) and by the search radar (20) in a certain time window after sending the transmission pulse, wherein the time of flight of a signal between the at least one direction-finding receiver (21, 22, 23) and the search radar (20) is determined, wherein the time window for receiving the reception pulse is calculated based on the time of flight and the size of the area to be monitored.

2. Method according to one of the preceding claims, **characterized in that** the codes are generated randomly.

3. Method according to either of the preceding claims, **characterized in that** all codes are selected to be different within M pulse repetition intervals, wherein M is greater than or equal to 2.

4. Method according to one of the preceding claims, **characterized in that** the signal waveform is randomly selected and varied from transmission pulse to transmission pulse.

5. Method according to one of the preceding claims, **characterized in that** a constant carrier frequency is used for all transmission pulses.

6. Method according to one of the preceding claims, **characterized in that** multiple direction-finding receivers (21, 22, 23) are used.

7. Radar system for carrying out the method according to one of the preceding claims, with a search radar (20) and with at least one direction-finding receiver (21, 22, 23) and with a random generator for the generation of different codes and/or for the selection of different signal waveforms, wherein a connection (24, 25, 26) is provided between the at least one direction-finding receiver (21, 22, 23) and the search radar (20), wherein multiple pulses with different codes and/or with different signal waveforms are transmitted by the search radar (20), wherein pulses scattered at a target are received by the direction-finding receiver (21, 22, 23) and by the search radar (20), wherein a check is carried out of whether these reception pulses are scattered at a target and thus form a useful signal or are formed by deception signals (11, 12), wherein reception directions of the reception pulses are determined by means of the at least one direction-finding receiver (21, 22, 23) and the search radar (20), wherein a check is carried out of whether the reception directions can be associated with a common target area (33, 35) and thus form a useful signal or are not associated with a common target area and thus form a deception signal (11, 12), wherein a check is carried out of whether the reception pulse was received by the direction-finding receiver and by the search radar in a certain time window after sending the transmission pulse, wherein the time of flight of a signal between the at least one direction-finding receiver (21, 22, 23) and the search radar (20) is determined, wherein the time window for receiving the reception pulse is calculated based on the time of flight and the size of the area to be monitored.

8. Radar system according to Claim 7, **characterized in that** the search radar (20) is in the form of a monostatic search radar (20).

## Revendications

1. Procédé pour faire fonctionner un système radar en vue d'éviter des leurres par des tiers, une connexion (24, 25, 26) entre au moins un récepteur de goniométrie (21, 22, 23) et un radar de recherche (20) étant fournie, plusieurs impulsions avec des codes différents étant émises et/ou avec des formes de signal différentes étant émises par le radar de recherche (20), les récepteurs de goniométrie (21, 22, 23) et le radar de recherche (20) recevant les impulsions dispersées au niveau d'une cible, un contrôle étant effectué afin de vérifier si ces impulsions reçues sont dispersées au niveau d'une cible et forment ainsi un signal utile ou sont formées par des signaux de leurre (11, 12), des directions de réception des impulsions reçues étant déterminées au moyen de l'au moins un récepteur de goniométrie (21, 22, 23) et du radar de recherche (20), un contrôle étant effectué afin de vérifier si les directions de réception peuvent être associées à une région cible (33, 35) commune et forment ainsi un signal utile ou ne sont pas associées à une région cible commune et forment ainsi un signal de leurre (11, 12), un contrôle étant effectué afin de vérifier si l'impulsion reçue a été reçue dans une fenêtre temporelle déterminée après l'émission de l'impulsion émise par le récepteur de goniométrie (21, 22, 23) et sa réception par le radar de recherche (20), le temps de propagation d'un signal entre l'au moins un récepteur de goniométrie (21, 22, 23) et le radar de recherche (20) étant déterminé, la fenêtre temporelle pour la réception de l'impulsion reçue étant calculée sur la base du temps de propagation et de la taille de la région à surveiller.

2. Procédé selon l'une des revendications précédentes, **caractérisé en ce que** les codes sont générés de manière aléatoire.

3. Procédé selon l'une des revendications précédentes, **caractérisé en ce que** tous les codes au sein de M intervalles de répétition des impulsions sont choisis différents, M étant égal ou supérieur à 2.

4. Procédé selon l'une des revendications précédentes, **caractérisé en ce que** la forme de signal est choisie de manière aléatoire et varie d'une impulsion émise à l'autre.

5. Procédé selon l'une des revendications précédentes, **caractérisé en ce qu'**une fréquence porteuse constante est utilisée pour toutes les impulsions émises.

6. Procédé selon l'une des revendications précédentes, **caractérisé en ce que** plusieurs récepteurs de goniométrie (21, 22, 23) sont utilisés.

7. Système radar destiné à mettre en œuvre le procédé selon l'une des revendications précédentes, comprenant un radar de recherche (20) et comprenant au moins un récepteur de goniométrie (21, 22, 23) et comprenant un générateur aléatoire destiné à générer des codes différents et/ou à sélectionner des formes de signal différentes, une connexion (24, 25, 26) entre l'au moins un récepteur de goniométrie (21, 22, 23) et le radar de recherche (20) étant fournie, plusieurs impulsions avec des codes différents étant émises et/ou avec des formes de signal différentes étant émises par le radar de recherche (20), les récepteurs de goniométrie (21, 22, 23) et le radar de recherche (20) recevant les impulsions dispersées au niveau d'une cible, un contrôle étant effectué afin de vérifier si ces impulsions reçues sont dispersées au niveau d'une cible et forment ainsi un signal utile ou sont formées par des signaux de leurre (11, 12), des directions de réception des impulsions reçues étant déterminées au moyen de l'au moins un récepteur de goniométrie (21, 22, 23) et du radar de recherche (20), un contrôle étant effectué afin de vérifier si les directions de réception peuvent être associées à une région cible (33, 35) commune et forment ainsi un signal utile ou ne sont pas associées à une région cible commune et forment ainsi un signal de leurre (11, 12), un contrôle étant effectué afin de vérifier si l'impulsion reçue a été reçue dans une fenêtre temporelle déterminée après l'émission de l'impulsion émise par le récepteur de goniométrie et sa réception par le radar de recherche, le temps de propagation d'un signal entre l'au moins un récepteur de goniométrie (21, 22, 23) et le radar de recherche (20) étant déterminé, la fenêtre temporelle pour la réception de l'impulsion reçue étant calculée sur la base du temps de propagation et de la taille de la région à surveiller.

8. Système radar selon la revendication 7, **caractérisé en ce que** le radar de recherche (20) est réalisé sous la forme d'un radar de recherche (20) monostatique.
